# EUROPEAN PATENT SPECIFICATION

(11) **EP 3 118 038 B1**
(45) Date of publication and mention of the grant of the patent: **17.02.2021**
(21) Application number: 16178949.0
(22) Date of filing: 12.07.2016
(51) Int. Cl.: B60J 7/06

(54) **COVERING SYSTEM FOR OPEN-TOP BODIES**
ABDECKSYSTEM FÜR OFFENE KÖRPER
SYSTÈME DE RECOUVREMENT POUR CORPS OUVERTS

(30) Priority: 15.07.2015 IT UB20152213
(43) Date of publication of application: 18.01.2017
(73) Proprietor: Marcolin Covering Srl, 33170 Pordenone (PN) (IT)
(72) Inventor: Amato, Davide, 33100 Pordenone (IT); Luca, Marcolin, 33170 Pordenone (IT)
(74) Representative: Citron, Massimiliano

(56) References cited:
- EP-A1- 0 616 915
- EP-A1- 2 708 397
- WO-A1-2012/000419
- DE-A1- 19 628 433
- DE-B3-102005 054 488
- JP-U- S5 373 620
- JP-U- S5 387 524

## Description

The invention relates to a covering system for open-top bodies, for example of vehicles or fixed containers.

Covering systems are known to cover/uncover a body that use a set of centerings to support and spread a tarpaulin over the body. The centerings run on opposite edges of the body pulled e.g. by rope loops, see e.g. WO2011 077 316. Fig. 1 shows a schematic of the drive. On the edge of a sideboard S of a truck Z slide horizontally (direction F2 parallel to the edge of the sideboard S) some centerings C pulled in a known way by a rope. In particular the first of the row (head centering T) and the second Ts are shown. To cover with the tarpaulin V also the part of the body Z that is in front of the centering T when all are spread, an oscillating arm B is used hinged on the centering T and attached to a flap of the tarpaulin V. Through the reaction of a chain Ch, fixed to the centering Ts and of appropriate length, the arm B is made to lower when the centering T reaches the end of the stroke (see arrow F1). The system works, but it has problems.

When the tarpaulin V is all spread above the body Z, the combination of the tension of the rope, that of the tarpaulin V and the traction of the chain Ch do tilt the centering T backwards toward the centering Ts, creating stresses in the structure and a pronounced depression D in the part of tarpaulin V between centerings T, Ts (see hatching). The depression C is unaesthetic , becomes a receptacle for dirt or ice or stagnant water, and in fact shortens the maximum area which can be covered by the tarpaulin V. The eventual sheet of ice that is formed becomes a danger in case it falls during the running of the vehicle. A little stretched tarpaulin can vibrate constantly during the running of the vehicle and can cause cuts in the fabric. Furthermore, the chain Ch during unfolding of the tarpaulin could hook to material inside the body Z and break, or could force a torsion on the head centering T.

JP 553 87524 U, JP 553 73620 U and EP 2 708 307 disclose a covering system for open-top bodies, for example of vehicles or fixed containers.

To obviate to at least one of these problems is the main object of the invention, which is defined in the appended claims, in which the dependent ones define advantageous variants. In particular, the problems related to depression D is desired to be solved.

The use of the abutment element and/or of element connected to the arm allows getting rid of the known chain, and therefore of all the related problems. It also makes the system calibration much easier: instead of varying the length or tension of the chain (inconvenient and laborious thing) it is sufficient to mount the abutment element on, or to make the abutment element integral with, the desired location on the body. The abutment element can be, for example. soldered, screwed, secured with screws or bolts or adhesive, on the body; or it can be produced as a part or an integral piece of the body.

The abutment element may have a structure or means adapted for permanent fixing or mounting on the body the structure (increases the robustness of the system), or may have structure or means adapted for removable fixing or mounting on the container (facilitates placement).

E.g. the abutment element may be fixed on a body's wall, which is in use vertical, such wall being an outer or inner wall of the body (small bulk). E.g. the abutment element may comprise or consist of a pin projecting from the wall. Or the abutment element may be on the upper edge of a sidewall, on the surface - horizontal in use- on which the head centering and/or all the other centerings slide. In this case the abutment element, in addition to being well accessible for the maintenance, may have other functions.

The abutment element comprises a first retainer guide or portion in which either a cooperating portion of the head centering or the element connected to the arm can slide or enter, e.g. by translating. This way the abutment element also operates as anti-lifting blocking for the head cen tering.

Said cooperating portion or the element connected to the arm consists of or comprises a rotating element or a rotatable shaft which is integral with the oscillating arm. The coupling between the cooperating portion or of the element connected to the arm with the guide is such as to prevent by interference of parts the spacing of head centering from the upper edge.

Preferably the first guide comprises a plane substantially parallel to the sliding direction of the head centering, so as to maintain the foot or the skid of the head centering aligned to the horizontal profile of the body and/or of the sidewall it slides on.

Preferably the arm, or said rotating element or rotatable shaft, is integral with an element eccentrically keyed on a rotation axis of the arm (e.g. a cam or a lever), wherein the eccentrically keyed element is destined to cooperate with a second guide of the abutment element so that to the sliding of the eccentrically keyed element on the second guide corresponds the lowering of the arm.

Or the arm is integral with an element eccentrically keyed on a rotation axis of the arm (cam or lever), the eccentrically keyed element being destined to cooperate with a portion or abutment of the abutment element in such a way that the collision with said portion or abutment corresponds to a rotation or displacement of the eccentrically keyed element and to lowering of the arm.

The interaction between the eccentrically keyed element and the second guide or the abutment permits a simple but precise and repeatable trajectory for the arm. Furthermore, being a displacement imposed by contact and/or slithering on the arm, there are no mechanical plays or oscillations.

Preferably, to have a simple and compact structure for the abutment element, the first and the second guide consist of or comprise two planes inclined with respect to each other comprised in the abutment element. The two inclined planes are preferably formed from by the opposite walls of a concavity (approximately U-shaped) present in the abutment element; this allows to easily accomplish the relative orientation of the two guides.

Preferably, the abutment element consists of or comprises a bracket or hook or pin applied to the body (for the simple manufacturing thereof.

Preferably the bracket or hook comprises a concavity, mounted facing towards the head centering, the walls of which form the first and the second guide. In particular, the concavity has a first segment or wall - horizontal in use - longer than a second segment or wall inclined with respect to the first. The configuration is such that in any case along the direction F2, the first segment or wall is always less distanced from the head centering.

Preferably, the arm moves inside a vertical plane, preferably approximately parallel to a vertical wall of the body, preferably an outer wall to not clutter the load space of the body.

Preferably the system comprises an elastic return element (e.g. a spring) mounted or acting on the arm, e.g. mounted or acting on the rotation axis of the arm. The aim is to raise the arm when the tarpaulin is folded packing all the centerings against each other.

The element connected to the arm may be rotatable. Preferably the arm is integral with or connected to a rotatable shaft that is hinged to a skid mounted on the foot of the centering that slides on the sidewall. In particular the rotatable shaft may be hinged to the skid around a rotatable axis supported by the skid at two points spaced from each other.

Thus the stresses discharged on the rotatable axis are symmetrical with respect to the skid, and they neither tilt it nor twist it horizontally. Preferably the axis is supported by the skid at two opposite sides of the skid, said opposite sides being one located towards the inside of the container body and the other towards the outside. In other words the opposite sides are parallel to the sliding direction of the centerings.

Preferably a lever destined to impact on the abutment element is integral with or connected to the rotating shaft.

Preferably, the skid comprises a fork structure for rotatably supporting said rotatable shaft. This simplifies the making of the skid and determines an inexpensive and simple to mount the rotatable axis on.

Preferably the shaft is mounted on and in front of the skid, i.e. in such a way to precede the skid when the head centering moves towards the position of stretched tarpaulin.

Note that said skid structure solves independently the problem of how to support the rotatable arm without inducing stresses or torsions on the head centering.

In general, the abutment element may have fixed or variable geometric structure, e.g. modifiable to be able to flatten itself against the sidewall or wall of the body and reduce its projection. The said pin could e.g. comprise a fixed base integral with the container body and a projecting body hinged to it to be able to bend (the same holds for the pin 40 and the hook 60 described below).
the system, which can be moved by the drawing action of known ropes, or by motorized trolleys, such as e.g. in EP09787639.7.

By *sidewall* generally it is meant a side wall of the container body which defines the internal cargo space thereof.

All the described variants are exploitable alone or combined together.

The advantages of the invention will be more apparent from the following description of preferred embodiments of the system, referring to the attached drawing in which
Fig. 1 shows a schematic side view of a known drive;
Fig. 2 shows a three dimensional view of a first system according to the invention;
Fig. 3 shows a view from above of the system of Fig. 2;
Fig. 4 shows a three dimensional view of the first system in a different configuration;
Fig. 5 shows a view from above of the system of Fig. 4;
Fig. 6 shows an enlarged side view of the system of Fig. 4;
Figs. 7 and 8 show a three dimensional view of a 2nd system according to the invention in two different operating configurations.

In the figures identical numbers indicate identical or conceptually similar parts, and the system is described as being in use and mounted on an open-top container body.

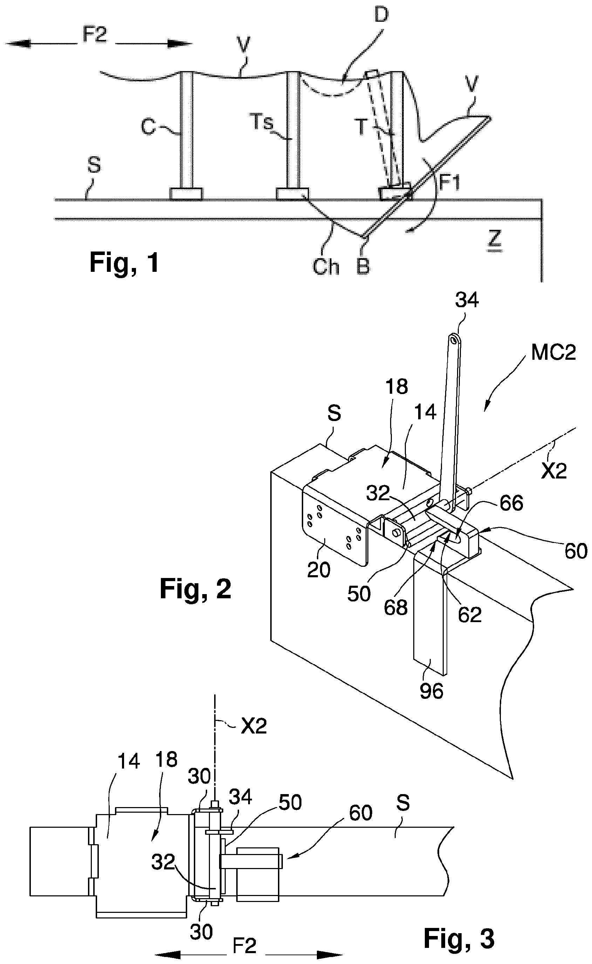

The covering system MC2 (fig. 2) comprises a plurality of centerings (not shown) that serve to support in a known manner a covering tarpaulin (not shown) for a body Z, e.g. with rectangular plan, whose sidewalls or lateral walls delimit a central load opening. Each centering has two feet 14 in contact with and sliding on the top (or upper edge) of opposite sidewalls of the body Z. Their surface is exploited, that is, the upper edge of the sidewall S, which is usually almost flat, to slide the centerings on it. The context is the general one of Fig. 1.

A centering has a symmetric structure and comprises (i) one or more arcs supporting the tarpaulin and (ii) a sliding foot or skid 14 on each sidewall S, for example. a plate or carriage, for example made of anti-friction material. The sidewalls S preferably are those relating to the longer sides of the body.

In Figures 2-5 for simplicity only the foot of the head centering is shown.

The skid 18 is formed by an upper metal plate and a lower anti-friction element 26. The plate comprises a flat rectangular or square portion 14 from which extend orthogonally, on one side, a second vertical plate 20 provided with holes 22 and, on one adjacent side, two fins 24. On the opposite side of the part 14 with respect to the fins 24, the part 14 comprises a U-bent portion 28.

The lower anti-friction element 26 is housed snugly under the part 14, between the fins 24 and the portion 28, and is fixed to the latter by means of screws or fastening means. The axis of the screws or the fixing means is horizontal, parallel to the plane of the sidewall S and to that of the flat portion 14. The position and the axis of the screws or fixing means makes it easier and faster to replace the anti-friction element 26; while the holes 22 allow quick and convenient mounting for the fittings for the drawing ropes. As of now the known skids have vertical screws, which when they wear out by slithering on the sidewalls S are very difficult to replace.

In the head centering, and only in that, from the margins of the portion 28 there extend two other vertical spaced-apart fins 30. Between the fins 30 is mounted a shaft 32 whose rotation axis X2 is substantially parallel to the surface of the sidewall S. The axis X2 in general is a horizontal rotation axis.

To the shaft 32 are fixed or keyed an arm 34 and a cam 50 (Fig. 9), both of which are pivotable around the axis X2 and have development with opposite and divaricated radial directions, slightly displaced with respect to a diametrical line passing through the axis X2. E.g. the angle between the arm 34 and the cam 50 can be 170 to 130 degrees, preferably about 150 degrees.

The cam 50 in the example comprises a shank 90 which is extends from the shaft 32 and which ends with a rounded head 92.

A helical spring (not shown) is mounted coaxially on the shaft 32 to push the arm 34 toward the upright position.

On the sidewall S is fixed or can be fixed a hook 60 having a concavity 62 facing the head centering. The concavity 62 has the form of a divaricated U and comprises a first approximately horizontal segment 64 and a second segment 66 inclined with respect to the first, which forms a sort of ascending ramp with respect to the plane of the sidewall S and comprises a step or initial abutment 68.

The first segment 64 has a level H with respect to the surface of the sidewall S nearly equal to the imaginary line tangent to the shaft 32 which is parallel and maximally distant with respect to the lying plane of the sidewall S.

The second segment 66 ends with the step or abutment 68, raised relative to the plane of the sidewall S.

### OPERATION

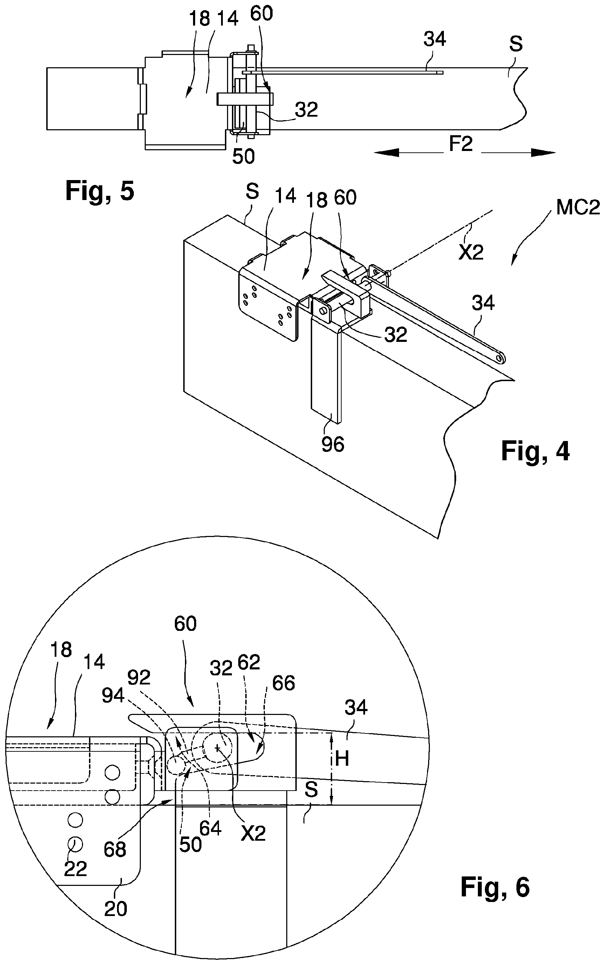

When you want to roll out the tarpaulin the centerings are drawn to distance themselves from each other above the sidewall S. the head centering approaches thus the hook 60, having the configuration as shown in Fig. 5: thanks to the force of the spring the arm 34 is approximately vertical and the cam 50 is turned towards the concavity 62 and downwards.

When the head centering arrives at the vicinity of the hook 60, first the shaft 32 slips under the segment 64, which will then guide it always with horizontal trajectory and without allowing it to get away from the sidewall S. For this aim, the segment 64 along the direction F2 is longer than the segment 66, or in any case it is always less distant from the head centering. Another great advantage of this configuration is that the head centering does not tilt anymore towards the penultimate adjacent centering, and the depression D is not formed.

At a certain point, the cam 50 impacts on the step or abutment 68. Since the shaft 32 continues to translate towards the bottom of the concavity 62, the temporary opposition of the step or abutment 68 rotates (clockwise in Fig. 9) the shaft 32 and lowers the arm 34. Therefore the piece of tarpaulin supported by the arm 34 falls over the body Z.

In addition to or instead of the shaft 32 there may be on the skid of the head centering another element which cooperates with the segment 64, e.g. a pin or a guide. However, the segment 64 and/or the segment 66 may also be absent on the hook 60, sufficing an abutment means to rotate the cam 50.

The shaft 32 still continues to move towards the bottom of the concavity 62, and the cam 50 goes up the segment 64 until the head centering does not come to the end-of-travel position. The cooperation of the planes 64, 66 allow also to establish the final fastening mechanical play of the head centering on the body Z.

By packaging the centerings in the opposite direction, the head centering goes away from the hook 60 and the spring rotates in the opposite direction the shaft 32 and the arm 34.

The main advantages are:
- by moving the hook 60 along the body Z one can define or program in a simple and repeatable manner the dynamics of the arm 34;
- the arm 34 can be mounted either inside (maximum system compactness) or outside the body (maximizing loading volume);
- The closing force exerted on the arm 34 is not discharged on the second centering Ts;
- the bulk and calibration of the chain Ch are avoided;
- The shaft 32 discharges the stress from the arm 34 on two opposite sides of the skid 14, not just one as the prior art. therefore the skid 14 does not tilt or turn up;
- the hook 60 also acts as a means of anti-lifting withdrawal for the head centering.

The hook 60 may also be used independently of the lowering mechanism for the tarpaulin (the arm 34) to lock the skid of the head centering to the body Z.

The hook 60 may be mounted on the sidewall S e.g. by an angular bracket comprising two segments 96 placed at 90 degrees to each other for adhering to two walls of the sidewall S.

### ANOTHER VARIANT

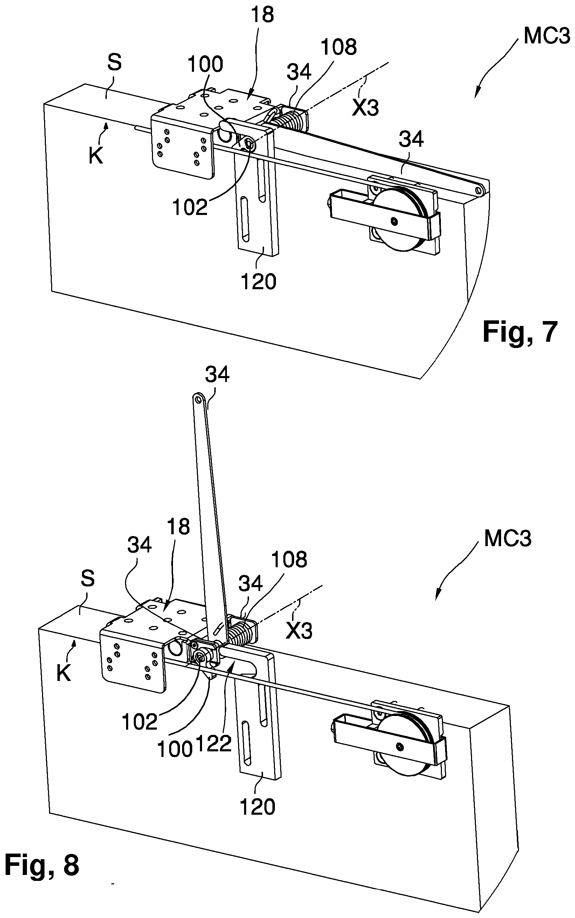

Another covering system MC3 (Figures 7 and 8) comprises as before a plurality of centerings (not shown) which have skids as the 18 equipped with a rotating shaft 102 equal to the shaft 32, whose Total description is not repeated.

The difference from the variant of Fig. 2 is the mechanism drive for the oscillating arm 34, in particular the position of the cam and the groove or concavity which operates it.

Between the fins 30 is mounted a shaft 102 whose rotation axis X3 is substantially parallel to the surface of the sidewall S. The axis X3 in general is a horizontal axis of rotation.

To the shaft 102 - as in the previous variant - are integral or keyed the arm 34 and a cam or hook 100.

This time, unlike the cam 50 - the cam or hook 100 is keyed about the axis X3 at the end of the shaft 102, so as to protrude from the edge or outer corner K of the sidewall S. A coil spring 108 is mounted coaxially on the shaft 102 to push the arm 34 towards the upright position (Fig. 11).

Outside the sidewall S is fixed or can be fixed a hook 120 having a concavity 122 facing the head centering. The concavity 122 is functionally equal to the concavity 62 and shares the function thereof.

The operation of this variant is similar to the previous one. In other words the concavity 122 protrudes on the upper part from the sidewall S to receive the cam or hook 100 and rotate the arm 34.

## Claims

1. Cover system (MC2; MC3) for an open-top container body (Z), comprising
an array of centerings (C) for supporting a covering tarpaulin (V), wherein each centering (C) has two feet (18) in contact with, and sliding on, the upper edge of opposite walls (S) of the body (Z),
a swinging arm (34), hinged on the centering placed at the head of the array, called head centering, so as to be able to lower and cover with a portion of tarpaulin one end of the body (Z),
an abutment element (40; 60), integral with the body (Z), destined to collide with an element (36; 50) connected to the arm (34) in order to lower the arm (34) when the head centering moves toward the position of the tarpaulin stretched over the body (Z),
**characterized by**
the abutment element (60; 120) comprising a first retainer guide or portion (64; 122) in which a cooperating portion (32) of the head centering or the element connected to the arm (34) can slide or enter, e.g. by translating,
so that the abutment element (60; 120) operates to retain a portion of the head centering on the body (Z),
and the element connected to the arm (34) consists of or comprises a rotating element or a rotatable shaft (32) which is integral with the oscillating arm.

2. System (MC2; MC3) according to claim 1, wherein the abutment element (60; 120) is fixed on a wall, which is in use vertical, of the body (Z), or on the upper edge (S) of a wall thereof, on the surface - horizontal in use- on which the head centering and/or all the other centerings slide.

3. System (MC2; MC3) according to any one of the preceding claims, wherein the first guide (64; 122) comprises a plane substantially parallel to the sliding direction of the head centering, so as to maintain the foot (14) of the head centering aligned to the horizontal profile of the body (Z).

4. System (MC2; MC3) according to any one of the preceding claims, wherein the arm (34), or said rotating element or rotatable shaft (32), is integral with an element (50; 100) eccentrically keyed on a rotation axis (X2; X3) of the arm, wherein the eccentrically keyed element (50; 100) is destined to cooperate with a second guide (66) of the abutment element so that to the sliding of the eccentrically keyed element (50; 100) on the second guide (66) corresponds the lowering of the arm (34).

5. System (MC2; MC3) according to any one of the preceding claims, wherein the arm (34) is integral with an element (50; 100) eccentrically keyed on a rotation axis (X2; X3) of the arm (34), the eccentrically keyed element (50; 100) being destined to cooperate with a portion or abutment (66) of the abutment element (60; 120) in such a way that the collision with said portion or abutment (66) corresponds to a rotation or displacement of the eccentrically keyed element (500; 100) and lowering of the arm (34).

6. System(MC2; MC3) according to any one of the preceding claims, wherein the first and second guide (64, 66; 122) consist of or comprise two planes inclined with respect to each other comprised in the abutment element (60; 120).

7. System (MC2; MC3) according to any one of the preceding claims, wherein the abutment element (60; 120) consists of or comprises a hook applied to the body (Z).

8. System (MC2; MC3) according to claim 7, wherein the hook comprises a concavity (62; 122), mounted facing towards the head centering, the walls of which form the first and the second guide.

9. System (MC2; MC3) according to claim 8, wherein the concavity (62; 122) has a first segment (64) or wall - horizontal in use - longer than a second segment (66) or wall inclined with respect to the first, so that in any case along the sliding direction (F2) of the centerings the first segment or wall (64) is always less distanced from the head centering.

10. System (MC2; MC3) according to any one of the preceding claims, wherein the element connected to the arm is rotatable and integral with or connected to a rotatable shaft (32) hat is hinged to a skid (18) mounted on the foot of the centering that slides on the sidewall of the body (Z).

11. System (MC2; MC3) according to claim 10, wherein the rotatable shaft (32) is hinged to the skid (18) around a rotatable axis supported by the skid at two points spaced from each other.

12. System (MC2; MC3) according to claim 11, wherein the rotatable axis is supported by the skid at two opposite sides of the skid, said opposite sides being one located towards the inside of the container body and the other towards the outside, so that said opposite sides are parallel to the sliding direction of the centerings.

13. System (MC2; MC3) according to any one of the preceding claims, comprising a lever which is
integral with or connected to the rotating shaft and
destined to impact on the abutment element.

14. System (MC2; MC3) according to any one of the preceding claims, wherein
the abutment element (40; 60) has a structure or means adapted for permanent or removable fixing or mounting on the body.

## Patentansprüche

1. Deckelsystem (MC2; MC3) für einen oben offenen Behälterkörper (Z), bestehend aus
eine Anordnung von Zentrierungen (C) zum Stützen einer Abdeckplane (V), wobei jede Zentrierung (C) zwei Füße (18) aufweist, die in Kontakt mit der Oberkante von gegenüberliegenden Wänden (S) des Aufbaus (Z) stehen und darauf gleiten,
einen Schwenkarm (34), der an der Zentrierung am Kopf des Arrays, der sogenannten Kopfzentrierung, angelenkt ist, so dass ein Ende des Aufbaus (Z) abgesenkt und mit einem Teil der Plane abgedeckt werden kann,
ein mit der Karosserie (Z) fest verbundenes Anschlagelement (40; 60), das dazu bestimmt ist, mit einem mit dem Arm (34) verbundenen Element (36; 50) zu kollidieren, um den Arm (34) abzusenken, wenn sich die Kopfzentrierung in Richtung der Position der über die Karosserie (Z) gespannten Plane bewegt,
**dazu gekennzeichnet dass**
das Widerlagerelement (60; 120) eine erste Halteführung oder einen ersten Halteabschnitt (64; 122) aufweist, in dem ein zusammenwirkender Abschnitt (32) der Kopfzentrierung oder das mit dem Arm (34) verbundene Element gleiten oder eintreten kann, z.B. durch Verschieben,
so dass das Widerlagerelement (60; 120) so wirkt, dass es einen Teil des Kopfes, der sich auf dem Körper (Z) zentriert, zurückhält,
und das mit dem Arm (34) verbundene Element aus einem rotierenden Element oder einer drehbaren Welle (32) besteht oder ein solches umfasst, das mit dem oszillierenden Arm einstückig ist.

2. System (MC2; MC3) nach Anspruch 1, bei dem das Widerlagerelement (60; 120) an einer im Gebrauch vertikalen Wand des Körpers (Z) oder an der Oberkante (S) einer Wand desselben auf der - im Gebrauch horizontalen - Fläche befestigt ist, auf der die Kopfzentrierung und/oder alle anderen Zentrierungen gleiten.

3. System (MC2; MC3) nach einem der vorstehenden Ansprüche, wobei die erste Führung (64; 122) eine zur Gleitrichtung der Kopfzentrierung im wesentlichen parallele Ebene umfaßt, so daß der Fuß (14) der Kopfzentrierung auf das horizontale Profil des Körpers (Z) ausgerichtet bleibt.

4. System (MC2; MC3) nach einem der vorstehenden Ansprüche, wobei der Arm (34) oder das rotierende Element oder die rotierende Welle (32) einstückig mit einem Element (50; 100) ist, das exzentrisch auf einer Rotationsachse (X2; X3) des Arms exzentrisch verkeilt ist, wobei das exzentrisch verkeilte Element (50; 100) dazu bestimmt ist, mit einer zweiten Führung (66) des Anschlagelements zusammenzuwirken, so dass dem Gleiten des exzentrisch verkeilten Elements (50; 100) auf der zweiten Führung (66) das Absenken des Arms (34) entspricht.

5. System (MC2; MC3) nach einem der vorstehenden Ansprüche, wobei der Arm (34) einstückig mit einem Element (50; 100) ausgebildet ist, das auf einer Drehachse (X2; X3) des Arms (34) exzentrisch verkeilt ist, wobei das exzentrisch verkeilte Element (50; 100) dazu bestimmt ist, mit einem Abschnitt oder Widerlager (66) des Widerlagerelements (60; 120) derart zusammenzuwirken, dass die Kollision mit diesem Abschnitt oder Widerlager (66) einer Drehung oder Verschiebung des exzentrisch verkeilten Elements (500; 100) und einem Absenken des Arms (34) entspricht.

6. System (MC2; MC3) nach einem der vorstehenden Ansprüche, wobei die erste und zweite Führung (64, 66; 122) aus zwei im Widerlagerelement (60; 120) enthaltenen, gegeneinander geneigten Ebenen bestehen oder zwei solche Ebenen umfassen.

7. System (MC2; MC3) nach einem der vorstehenden Ansprüche, wobei das Widerlagerelement (60; 120) aus einem am Körper (Z) angebrachten Haken besteht oder einen solchen aufweist.

8. System (MC2; MC3) nach Anspruch 7, wobei der Haken eine Konkavität (62; 122) aufweist, die der Kopfzentrierung zugewandt montiert ist und deren Wände die erste und die zweite Führung bilden.

9. System (MC2; MC3) nach Anspruch 8, wobei die Konkavität (62; 122) ein erstes Segment (64) oder eine erste Wand - horizontal im Gebrauch - aufweist, das/die länger als ein zweites Segment (66) oder eine zweite Wand ist, das/die in Bezug auf das erste geneigt ist, so dass in jedem Fall entlang der Gleitrichtung (F2) der Zentrierungen das erste Segment oder die erste Wand (64) immer weniger von der Kopfzentrierung beabstandet ist.

10. System (MC2; MC3) nach einem der vorstehenden Ansprüche, wobei das mit dem Arm verbundene Element drehbar und mit einer drehbaren Welle (32) einstückig oder verbunden ist, wobei der Hut an einem Schlitten (18) angelenkt ist, der am Fuß der Zentrierung montiert ist, die an der Seitenwand des Körpers (Z) gleitet.

11. System (MC2; MC3) nach Anspruch 10, bei dem die drehbare Welle (32) um eine drehbare Achse, die von der Gleitkufe an zwei voneinander beabstandeten Punkten getragen wird, an der Gleitkufe (18) angelenkt ist.

12. System (MC2; MC3) nach Anspruch 11, bei dem die Drehachse durch den Schlitten an zwei gegenüberliegenden Seiten des Schlittens getragen wird, wobei die gegenüberliegenden Seiten eine zur Innenseite des Behälterkörpers und die andere zur Außenseite hin angeordnet sind, so dass die gegenüberliegenden Seiten parallel zur Gleitrichtung der Zentrierungen sind.

13. System (MC2; MC3) nach einem der vorstehenden Ansprüche, bestehend aus einem Hebel, der integral mit der rotierenden Welle oder mit dieser verbunden und die dazu bestimmt sind, auf das Widerlagerelement zu wirken.

14. System (MC2; MC3) nach einem der vorstehenden Ansprüche, wobei das Schnapp-Kupplungselement (40; 60) eine Struktur oder Mittel aufweist, die zur dauerhaften oder abnehmbaren Befestigung oder Montage am Körper geeignet sind.

## Revendications

1. Système de couvercle (MC2 ; MC3) pour un corps de conteneur (Z) ouvert sur le dessus, comprenant
un ensemble de centrages (C) pour supporter une bâche de couverture (V), dans lequel chaque centrage (C) a deux pieds (18) en contact avec, et glissant sur, le bord supérieur des parois opposées (S) du corps (Z),
un bras pivotant (34), articulé sur le centrage placé en tête de la matrice, appelé centrage de la tête, de manière à pouvoir descendre et recouvrir d'une portion de bâche une extrémité du corps (Z),
un élément de butée (40 ; 60), solidaire du corps (Z), destiné à entrer en collision avec un élément (36 ; 50) relié au bras (34) afin d'abaisser le bras (34) lorsque le centrage de la tête se déplace vers la position de la bâche tendue sur le corps (Z),
**caractérisé par**
l'élément de butée (60 ; 120) comprenant un premier guide ou partie de retenue (64 ; 122) dans lequel une partie coopérante (32) du centrage de la tête ou l'élément relié au bras (34) peut glisser ou entrer, par exemple par translation,
de sorte que l'élément de butée (60 ; 120) fonctionne pour retenir une partie de la tête centrée sur le corps (Z),
et l'élément relié au bras (34) est constitué ou comprend un élément rotatif ou un arbre rotatif (32) qui est solidaire du bras oscillant.

2. Système (MC2 ; MC3) selon la revendication 1, dans lequel l'élément de butée (60 ; 120) est fixé sur une paroi, qui est verticale en utilisation, du corps (Z), ou sur le bord supérieur (S) d'une paroi de celui-ci, sur la surface - horizontale en utilisation - sur laquelle glissent le centrage de la tête et/ou tous les autres centrages.

3. Système (MC2 ; MC3) selon l'une quelconque des revendications précédentes, dans lequel le premier guide (64 ; 122) comprend un plan sensiblement parallèle à la direction de coulissement du centrage de la tête, de manière à maintenir le pied (14) du centrage de la tête aligné sur le profil horizontal du corps (Z).

4. Système (MC2 ; MC3) selon l'une quelconque des revendications précédentes, dans lequel le bras (34), ou ledit élément rotatif ou arbre rotatif (32), est solidaire d'un élément (50 ; 100) claveté de manière excentrique sur un axe de rotation (X2 ; X3) du bras, dans lequel l'élément à clavetage excentrique (50 ; 100) est destiné à coopérer avec un second guide (66) de l'élément de butée de sorte que le glissement de l'élément à clavetage excentrique (50 ; 100) sur le second guide (66) correspond à l'abaissement du bras (34).

5. Système (MC2 ; MC3) selon l'une quelconque des revendications précédentes, dans lequel le bras (34) est solidaire d'un élément (50 ; 100) claveté de manière excentrique sur un axe de rotation (X2 ; X3) du bras (34), l'élément claveté de manière excentrique (50 ; 100) étant destiné à coopérer avec une partie ou butée (66) de l'élément de butée (60 ; 120) de telle sorte que la collision avec ladite partie ou butée (66) correspond à une rotation ou déplacement de l'élément à clavetage excentrique (500 ; 100) et à un abaissement du bras (34).

6. Système (MC2 ; MC3) selon l'une quelconque des revendications précédentes, dans lequel le premier et le second guide (64, 66 ; 122) sont constitués ou comprennent deux plans inclinés l'un par rapport à l'autre compris dans l'élément de butée (60 ; 120).

7. Système (MC2 ; MC3) selon l'une quelconque des revendications précédentes, dans lequel l'élément de butée (60 ; 120) consiste en ou comprend un crochet appliqué sur le corps (Z).

8. Système (MC2 ; MC3) selon la revendication 7, dans lequel le crochet comprend une concavité (62 ; 122), montée face au centrage de la tête, dont les parois forment le premier et le second guide.

9. Système (MC2 ; MC3) selon la revendication 8, dans lequel la concavité (62 ; 122) a un premier segment (64) ou paroi - horizontal en utilisation - plus long qu'un second segment (66) ou paroi incliné par rapport au premier, de sorte que dans tous les cas le long de la direction de glissement (F2) des centres, le premier segment ou paroi (64) est toujours moins éloigné du centrage de la tête.

10. Système (MC2 ; MC3) selon l'une quelconque des revendications précédentes, dans lequel l'élément relié au bras est rotatif et solidaire ou relié à un arbre rotatif (32) ; le chapeau est articulé sur un patin (18) monté sur le pied du centrage qui coulisse sur la paroi latérale du corps (Z).

11. Système (MC2 ; MC3) selon la revendication 10, dans lequel l'arbre rotatif (32) est articulé sur le patin (18) autour d'un axe rotatif supporté par le patin en deux points espacés l'un de l'autre.

12. Système (MC2 ; MC3) selon la revendication 11, dans lequel l'axe de rotation est supporté par le patin sur deux côtés opposés du patin, lesdits côtés opposés étant situés l'un vers l'intérieur du corps du conteneur et l'autre vers l'extérieur, de sorte que lesdits côtés opposés sont parallèles à la direction de glissement des centres.

13. Système (MC2 ; MC3) selon l'une quelconque des revendications précédentes, comprenant un levier qui est intégré ou relié à l'arbre rotatif et destiné à avoir un impact sur l'élément de culée.

14. Système (MC2 ; MC3) selon l'une quelconque des revendications précédentes, dans lequel l'élément de butée (40 ; 60) possède une structure ou un moyen adapté pour une fixation ou un montage permanent ou amovible sur le corps.
